(19) Europäisches Patentamt
European Patent Office
Office européen des brevets

(11) Veröffentlichungsnummer: **0 139 309**
**B1**

(12) # EUROPÄISCHE PATENTSCHRIFT

(45) Veröffentlichungstag der Patentschrift: **12.09.90**

(21) Anmeldenummer: **84201084.5**

(22) Anmeldetag: **23.07.84**

(51) Int. Cl.$^5$: **C 08 G 8/10,** C 08 G 8/28, C 08 L 61/10, C 08 L 61/14, C 09 J 161/06, C 08 K 5/42

(54) **Mehrkomponenten-Bindemittel mit verlängerter Verarbeitbarkeitszeit.**

(30) Priorität: **04.10.83 DE 3335933**

(43) Veröffentlichungstag der Anmeldung:
**02.05.85 Patentblatt 85/18**

(45) Bekanntmachung des Hinweises auf die Patenterteilung:
**12.09.90 Patentblatt 90/37**

(84) Benannte Vertragsstaaten:
**AT BE DE FR GB IT LU NL**

(56) Entgegenhaltungen:
**EP-A-0 050 020**
**EP-A-0 054 509**
**DE-C- 715 163**
**US-A-4 383 098**

(73) Patentinhaber: **RÜTGERSWERKE AKTIENGESELLSCHAFT**
**Mainzer Landstrasse 217**
**D-6000 Frankfurt am Main 1 (DE)**

(72) Erfinder: **Gardziella, Arno, Dr.**
**Rüdinghauser Berg 4**
**D-5810 Witten (DE)**
Erfinder: **Schwieger, Karl-Heinz, Dr.**
**An der Stennert 43**
**D-5860 Iserlohn 7 (DE)**
Erfinder: **Adolphs, Peter, Dr.**
**Seilerblick 19**
**D-5860 Iserlohn (DE)**
Erfinder: **Grossmann, Gerhard**
**Wittekindweg 9**
**D-5860 Iserlohn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 139 309 B1

**Beschreibung**

Die Erfindung betrifft Bindemittel auf der Basis säurehärtender, wäßriger Phenolharze und saurer Härtungsmittel, die nach dem Vermischen eine verlängerte Verarbeitungszeit, aber trotzdem eine schnelle Aushärtungszeit bei relativ niedrigen Temperaturen besitzen.

Für verschiedene Anwendungszwecke, wie z.B. zur Herstellung von phenolharzgebundenen Formkörpern, vob faserverstärkten Phenolharzprodukten oder von Schleifmitteln auf Unterlage benötigt man Harz-Härter-Systeme, die bei Raumtemperatur möglichst mehrere Stunden lagerstabil sind, d.h. die nach mehreren Stunden noch verarbeitbar sind, die aber bei nur mäßig erhöhter Tempertur innerhalb weniger Minuten gelieren und bei denen sich je nach Anwendung Verarbeitbarkeitszeit und Gelierzeit in gewissen Grenzen variieren lassen.

Bei bisherigen Systemen hat man sich entweder mit relativ geringen Verarbeitbarkeitszeiten (bei Mehrkomponentensystemen) zufrieden gegeben oder die Härtung bei relativ hohen Temperaturen von 120—140°C durchgeführt.

Da beide Lösungen technisch nicht befriedigend sind, bestand ein Bedarf nach bindemitteln auf der Basis von Phenolharzen, die den oben genannten Bedingungen entsprechen und die zudem gute mechanische Eigenschaften besitzen. Die Lösung dieser Aufgabe erfolgt durch Bereitstellen von Bindemitteln gemäß der Ansprüche 1—4.

Die Verwendung von Salzen zur Härtung von Phenolresolen ist aus J. Scheiber, Chemie und Technologie der künstlichen Harze, Wiss. Verlagsgesellschaft 1943, Seite 503 bekannt. Es handelt sich dabei um salze, die in wäßriger Lösung infolge Hydrolyse sauer reagieren, wie z.B. Eisen(III)-chlorid oder Aluminiumchlorid (CH—PS—66 513) oder um Alkalisalze von Sulfonsäuren der Aralkylchloride (DRP 715 163). Diese Salze ergeben bereits in der Kälte eine sehr gute Härtung. Eine Variation der Verarbeitungszeit ist mit diesen Härtern nicht möglich.

Aus EPA 0 050 020 ist bekannt, die Verarbeitungszeit säurehärtender Phenolharze zu verlängern, wenn man als Härter Substanzen verwendet, die in der Mischung zu starken Säuren hydrolysieren, wie z.B. aromatische Sulfonylchloride.

Eine Betrachtung der erhaltenen Werte zeigt, daß eine Anhebung der Verarbeitungszerit auf etwa 40 min bei 20°C bei noch akzeptabler Härtungszeit bei 23°C möglich ist, jedoch ist die so erzeielte Verlängerung der Verarbeitungszeit noch nicht zufriedenstellend.

Aus US—A—4 383 098 ist bekannt, daß wäßrige Phenolresole, die mit wäßrigen Lösungen bestimmter Salze aromatischer Sulfonsäuren vermischt werden, bei Raumtemperatur eine Verarbeitbarkeitszeit von mehreren Stunden haben, aber trotzdem bei erhöhter Temperatur schnell gelieren und aushärten.

Es wurde gefunden, daß Anlagerungsprodukte von wasserverträglichen Polyolen mit einer OH-Zahl im Bereich von 50 bis 500 an aromatische Sulfonsäuren der nachstehend angegebenen allgemeinen Formel ein noch günstigeres Härtungverhalten zeigen. Diese Härtung mit sauren Polyoladdukten führt jedoch zu einer gewissen Flexiblisierung des gehärteten Produktes, die nicht immer erwünscht ist.

Es wurde gefunden, daß das optimale Härtungsverhalten und die optimalen mechanischen Eigenschaften der gehärteten Harze durch eine Kombination dieser beiden Härtertypen, d.h. durch ein Gemisch der Cu-, Al- oder Fe(III)-Salze nachstehend formelmäßig definierter aromatischer Sulfonsäuren und saurer Polyoladdukte im relativen Verhältnis von 90:10 bis 10:90, bevorzugt im Verhältnis 50:50 eingesetzt werden.

Die erfindungsgemäß verwendeten säurehärtenden Phenolharze sind alkalisch kondensierte Reaktionsprodukte aus Phenolen und Aldehyden, wobei ein- oder mehrkernige Phenole verwendet werden, da beide Klassen im erfindungsgemäßen Sinne wirksame Kondensationsprodukte bilden können. Im einzelnen kommen hierfür einkernige Phenole, und zwar sowohl ein- als auch mehrwertige Phenole, wie das Phenol selbst, sowie dessen alkylsubstituierte Homologe, wie o-, m-, p-Kresol oder Xylenole in Betracht. Außerdem sind halogensubstituierte Phenole günstig, wie das Chlor- oder Bromphenol und mehrwertige Phenole wie Resorcin oder Brenzkatechin. Unter den mehrkernigen Phenolen sind einerseits z.B. Naphthole, d.h. Verbindungen mit anellierten Ringen, zu verstehen. Andererseits sind aber auch solche mehrkernige Phenole im erfindungsgemäßen Sinn verwendbar, die durch aliphatische Brücken oder durch Heteroatome, wie Sauerstoff, verknüpft sind. Außerdem liefern auch mehrwertige mehrkernige Phenole günstige Produkte. Als Aldehydkomponente können Formaldehyd, Acet-, Propion- oder Butyraldehyd eingesetzt werden, sowie Produkte, die unter Kondensationsbedingungen Aldehyd freisetzen können wie z.B. Formaldehydbisulfit, Urotropin, Trioxymethylen, Paraformaldehyd oder Paraldehyd. Die stöchiometrischen Mengen an Phenol- und Aldehydkomponenten liegen im Verhältnis 1:1,1 bis 1:3,0. Die Harze werden üblicherweise in Form wäßriger Lösungen mit einem Gehalt an Nichtflüchtigen nach DIN 16916 — 02 — H1 von 60 bis 85% eingesetzt.

Die erfindungsgemäß eingesetzten Phenolharze haben bevorzugt einen Gehalt an monomeren Phenolen unter 5%. Sie können zusätzlich noch mit bis zu 30% Harnstoff, Melamin oder Furfurylalkohol modifiziert werden.

Als Salze organischer Sulfonsäuren wirken im Sinne der Erfindung: die Kupfer-, Aluminium und Eisen([III)]-Salze aromatischer Sulfonsäuren der allgemeinen Formel

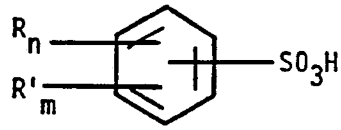

wobei R und R′ gleich oder verschieden sein können und Wasserstoff eine Alkyl-, Hydroxi-, Alkoxi, Carboxyl-, eine substituierte oder unsubstituierte Aryl- oder Aralkylgruppe oder eine weitere gegebenenfalls substituierte Sulfonylgruppe darstellen und n und m gleich oder verschieden sein können und ganze Zahlen von 0 bis 5 jedoch zusammen nicht mehr als 5 bedeuten. Beispiele für derartige Sulfonsäuren sind Benzolsulfonsäuren, Benzoldisulfonsäuren, Alkylbenzolsulfonsäuren wie Toluol-, Toluoldi-, Xylol-, Trimethylbenzol-, Isopropylbenzol- oder Tetrahydronaphthalinsulfonsäure, Sulfobenzoesäure, Sulfophthalsäure, Hydroxisulfonsäuren wie Hydroxibenzol-, Dihydroxibenzol-, Hydroxidi- oder Kresolsulfonsäure, Methoxi-, Carboxi-hydroxi-, Diphenylmethandi-, Diphenylätherdi-, Diphenylsulfondi-, Naphthalin-, Alkylnaphthalin-, Naphthalindi-, Anthrachinon- oder Carbazolsulfonsäure. Die bevorzugten Sulfonsäuren sind Benzol-, Phenol- o. p-Toluolsulfonsäure. Es können Salze einzelner Sulfonsäuren oder von Sulfonsäuregemischen sowie Gemische von salzen verschiedener Metalle eingesetzt werden.

Die ebenfalls als Härter verwendeten Anlagerungsprodukte von aromatischen Sulfonsäuren der vorstehend genannten Formel an Polyole werden durch Vermischen der wäßrigen Lösungen der Säuren mit den Polyolen oder deren wäßrigen Lösungen und anschließendes Erwärmen der Mischungen (5—10 min auf 50—100°C). Sie werden als wäßrige Lösungen eingesetzt.

Das molare Verhaltnis Säure zu Polyol liegt im Bereich von 3:1 bis 1:3. Bevorzugt wird ein molares Verhältnis von 2:1 verwendet. Als aromatische Sulfonsäuren für die erfindungsgemäßen Additionsprodukte lassen sich alle oben genannten Sulfonsäuren einzeln oder im Gemisch miteinander eisetzen. Bevorzugt werden Benzol-, Phenol- und/oder p-Toluolsulfonsäure verwendet.

Als Polyole eignen sich sowohl wasserlösliche Polyäther- als auch Polyesterpolyole, sofern sie eine OH-Zahl im Bereich von 50—500 haben. Die Polyole haben im allgemeinen ein Molekulargewicht im Bereich von 200 bis 4000.

Beispiele für Polyätherpolyole sind Polyäthylenglykole, Polypropylenglykole oder Umsetzungsprodukte von Propylenoxid mit verschiedenen Triolkomponenten wie Trimethylolpropan oder Glycerin bzw. mit penta- und hexafunktionellen Alkoholen.

Polyesterpolyole sind Kondensationsprodukte aus aliphatischen und/oder aromatischen Dicarbonsäuren wie z.B. die drei isomeren Phthalsäuren oder Adipin-, Bernstein-, Glutarsäure u.ä. mit mehrwertigen Alkoholen wie z.B., Butandiol, Hexantriol, Glycerin oder Trimethylolpropan. Mit gutem Erfolg lassen sich auch die durch Zusatz ungesättigter Fettsäuren modifizierten Polyole einsetzen.

Die Menge der eingesetzten Härtungsmittel wird so bemessen, daß das Gewichtsverhältnis Harz zu Härtungsmitteln bzw. Härtungsmittelkombination im Bereich von 1:0,05 bis 1:0,5 liegt. Die so hergestellten Mischungen haben bei Raumtemperatur eine Verarbeitungszeit von mehr als 4 h, d.h. in dieser Zeitspanne ist die Härtung so minimal, daß nur ein relativ geringer Anstieg der Viskosität zu beobachten ist un daß eine Verarbeitung erfolgen kann, ohne daß das Polymergefüge des später gehärteten Produkts gestört ist.

Die Härtung wird in der Praxis bei mäßig erhöhter Temperatur, bevorzugt im Bereich von 60—80°C durchgeführt. Hierbei ist die Harz-Härter-Mischung innerhalb weniger Minuten klebrei und die Aushärtung erfolgt so, daß sie nach 1 bis 3 h abgeschlossen ist.

Die erfindungsgemäßen Harz-Härter-Gemische eignen sich aufgrund ihrer Eigenschaften und ihrem Härtungverhalten insbesondere für folgende Anwendungsgebiete: zur Imprägnierung von Geweben, zur Herstellung von Schleifmitteln oder von faser-, insbesondere glasfaserverstärkten Kunststoffen.

Die Erfindung wird durch die folgenden Beispiele näher erläutert:

## BEISPIELE

Phenolresollösungen werden bei Raumtemperatur mit verschiedenen Härterlösungen vermischt.

Mit diesen Phenol-Härter-Mischungen werden jeweils die folgenden Versuche durchgeführt:

a. Viskosität sofort nach Mischen der Komponenten. Die Bestimmung erfolgt bei 20°C mit einem Kugelfallviskosimeter nach DIN 53015.

b. Viskosität 4h nach Mischen der Komponenten und Lagerung der Mischung bei 20°C. Die Bestimmung erfolgt bei 20°C mit einem Kugelfallviskosimeter nach DIN 53015.

c. Gelierzeit (Gel.) bei 100°C nach DIN 16916—02—D.

d. Gelierzeit (Gel.) bei 130°C nach DIN 16916—02—D.

e. Rockwellhärte (RH)

Die Bestimmung der Rockwellhärte erfolgt nach einer Aushärtung bei 80°C im Trockenschrank mit einer Stahlkugel gemäß DIN 53456. Bei den erfindungsgemäßen Versuchen und den Vergleichsversuchen mit reaktiven Mischungen beträgt die Aushärtungszeit 3,5 h. Bei Vergleichsversuchen mit wenig reaktiven Mischungen ist nach der gemessenen RH die dazu benötigte Zeit angegeben.

f. Aufstrich auf Vulkanfiber

Auf einem halbierten Vulkanfiberrondell von 18 cm Durchmesser wird mit Hilfe eines Handbeschichtungsgerätes (Hand-Coater K 8) das Harz bzw. Harz- Härter-Gemisch in einer Schichtdicke von ca. 100 µm (Naßfilm) aufgetragen. Nach 20 sec wird die so präparierte Vulkanfiberprobe in einem auf 80°C vorgeheizten Trockenschrank ausgehärtet.

Bestimmt wird die Zeit, die zum Erreichen einer klebfreien Oberfläche (Nichthaften von aufgestreutem Sand) benötigt wird. Außerdem wird die ausgehärtete Probe begutachtet, wie die aufgetragene Schicht verlaufen ist. Dabei wird der Verlauf wie folgt beurteilt:

| | |
|---|---|
| gut | : Verlauf gleichmäßig, keine Fischaugen, Krater oder Blasen. |
| mittel | : Verlauf nicht ganz gleichmäßig, kleine Pickel, kleine Blasen. |
| schlecht | : Verlauf ungleichmässig, Fischaugen, Krater, Blasen. |

Versuchsergebnisse

Die erhaltenen Ergebnisse sind im Anschluß an die Beschreibung der in den Beispielen und Vergleichsbeispielen eingesetzten Härter tabellarisch aufgelistet.

Eingesetztes Phenolharz

Alle Beispiele und Vergleichsbeispiele (mit Ausnahme der Vergleichsbeispiele (mit Ausnahme der Vergleichsbeispiele 2 und 3) werden mit einem handelsüblichen alkalisch kondensierten Phenol-Formaldehyd-Kondensationsharz mit einem Phenol/Formaldehyd-Verhältnis von 1:1,8 und einem durchschnittlichen Gehalt von 3—4% freiem Phenol durchgeführt. Dieses Phenolresol wird als wäßrige Lösung eingesetzt mit einem Gehalt an Nichtflüchtigen nach DIN 16916—02—H1 von ca. 79%.

Eingesetzte Härter

Die verwendeten Sulfonate sind technische, handelsübliche Produkte, die als wäßrige Lösungen zu erhalten sind und unverändert eingesetzt werden. Die Anlagerungsprodukte aus Sulfonsäuren und Polyolen werden gewonnen, indem die entsprechenden Mengen Polyol und wäßriger Sulfonsäurelösung miteinander vermischt und 15 min bei 50°C gehalten wurden. Die erhaltenen Lösungen werden nach dem Erkalten ohne weitere Veränderung in den angegebenen Mengen eingesetzt.

In den einselnen Beispielen werden Art und Menge der Härter und Härtermischungen wie folgt vaiiert. Die in Gewichtsteilen (GT) angegebenen Mengen beziehen sich jeweils auf 100 Gewichtsteile Phenolresollösung. Alle Prozentangaben sind Angaben in Gewichtsprozenten.

Beispiel 1

Härter: 15 GT eines Anlagerrungsproduktes aus 67 GT 60-%iger wäßriger p-Toluolsulfonsäurelösung und 33 GT eines Polyesterpolyols mit einer OH-Zahl von 350.

Beispiel 2

Härter: 15 GT eines Anlagerungsproduktes aus 67 GT 60-%iger wäßriger p-Toluolsulfonsäurelösung und 33 GT eines Polyesterpolyols mit einer OH-Zahl von 110.

Beispiel 3

Härter: 20 GT eines Härters gemäß Beispiel 2.

Beispiel 4

Härter: 15 GT eines Anlagerungsproduktes aus 67 GT 60-%iger wäßriger Phenolsulfonsäurelösung und 33 GT eines Polyesterpolyols mit einer OH-Zahl von 350.

Beispiel 5

Härter: 15 GT eines Anlagerungsproduktes aus 33 GT 60-%iger wäßriger Phenolsulfonsäurelösung und 67 GT eines Polyesterpolyols mit einer OH-Zahl von 350.

Beispiel 6

Härter: 15 GT eines Anlagerungsproduktes aus 67 GT 60-%iger wäßriger Phenolsulfonsäurelösung und 33 GT eines Polyesterpolyols mit einer OH-Zahl von 110.

Beispiel 7

Härter: 15 GT eines Anlagerungsproduktes aus 33 GT 60-%iger wäßriger Phenolsulfonsäurelösung und 67 GT eines Polyesterpolyols mit einer OH-Zahl von 110.

Beispiel 8

Härter: 15 GT Anlagerungsprodukt, hergestellt aus 35 GT eines Polypropylenglykols mit einem mittleren Molekulargewicht von 2000 und einer OH-Zahl von 56 und 65 GT 60%iger wäßriger p-Toluolsulfonsäurelösung.

Beispiel 9

Härter: 15 GT eines Anlagerungsproduktes, hergestellt aus 65 GT 60%iger wäßriger p-Toluolsulfonsäurelösung und 33 GT eines Polyäthylenglykols mit einem mittleren Molekulargewicht von 400 und einer OH-Zahl von 267.

Beispiel 10

Härter: 15 GT eines Anlagerungsproduktes, hergestellt aus 65 GT einer 40%igen wäßrigen Lösung von Naphthalinsulfonsäure (Isomerengemisch) und 35 GT eines Polyesterpolyls mit einer OH-Zahl von 350.

Beispiel 11

Härter: 15 GT eines Gemisches aus 50 GT einer 50%igen wäßrien Lösung von Aluminiumphenolsulfonat und 50 GT eines Anlagerungsproduktes, hergestellt aus 33 GT 60%iger Xylolsulfonsäurelösung (Isomerengemisch) und 67 GT eie Polypropienglykols (MG 2000; OH-Zahl 56).

Beispiel 12

Härter: 15 GT eines Gemisches aus 85 GT einer 50-%igen Lösung von Aluminiumphenolsulfonat in Wasser und 15 GT eines Anlagerungsproduktes aus 33 GT 60%iger wäßriger p-Tolulolsulfonsäurelösung und 67 GT Polyesterpolyol mit OH-Zahl 350.

Beispiel 13

Härter: 15 GT eines Gemsiches aus 15 GT 50%iger Lösung von Aluminiumsulfonat in Wasser und 15 GT eines Anlagerungsproduktes aus 33 GT 60%iger wäßriger p-Toluolsulfonsäurelösung und 67 GT Polyesterpolyol mit OH-Zahl 350.

Beispiel 14

Härter: 15 GT eines Gemisches aus 50 GT 50%iger Lösung von Aluminiumsulfonat in Wasser und 50 GT eines Anlagerungsproduktes aus 50 GT 60%iger wäßriger p-Toluolsulfonsäurelösung und 50 GT Polyesterplyol mit OH-Zahl 350.

Beispiel 15

Härter: 15 GT eines Anlagerungsproduktes aus 67 GT 50%iger wäßriger Benzolsulfonsäurelösung und 33 GT eines Polyesterpolyols mit einer OH-Zahl von 110.

Vergleichsbeispiel 1

kein Härter.

Vergleichsbeispiel 2

kein Härter; als Harz wird ein reaktives Phenolresol auf Basis Phenol-Formaldehye im Verhältnis 1:1,7 mit einem freien Phenolgehalt von 7,5%, eier Gelierzeit bei 100°C von 30 min und einem Anteil an Nichtflüchtigen von 75% eingesetzt.

Vergleichsbeispiel 3

kein Härter; als Harz wird ein Gemisch aus einem reaktiven Phenolresol (entsprechend Vergleichsbeispiel 2) und einem reaktiven Phenol-Resorcinresol im Verhältnis 1:1 eingesetzt. Das Phenol-Resorcin-Resol hat ein Verhältnis Phenol und Resorcin zu Formaldehyd von 1:,5 und einen Gehalt an Nichtflüchtigen von 75%.

Vergleichsbeispiel 4

Härter: 3 GT Benzolsulfonsäurechlorid.

Vergleichsbeispiel 5

Härter: 3 GT p-Toluolsulfonsäure.

Vergleichsbeispiel 6

Härter: 15 GT p-Toluolsulfonsäure.

Vergleichsbeispiel 7

Härter: 15 GT Kalium-p-toluolsulfonat (42%ig in Wasser).

Vergleichsbeispiel 8

Härter: 15 GT eines Anlagerungsprodukters aus 67 GT Cloressigsäure und 33 GT eines Polyesterpolyols mit OH-Zahl 350.

Vergleichsbeispiel 9

Härter: Eisen (III)chlorid.

| Beispiel Nr. | a<br>Viskosität sofort<br>(mPa·s) | b<br>Viskosität n. 4 h<br>(mPa·s) | c<br>Gel.100°C<br>(min;sec) | d<br>Gel.130°C<br>(min;sec) | e<br>RH | f<br>Aufstrich<br>klebfrei<br>(min) | f<br>Aufstrich<br>Verlauf |
|---|---|---|---|---|---|---|---|
| 1 | 400 | >4000 | 5'30" | 3'00" | 977 | 8 | mittel |
| 2 | 540 | 1600 | 7'00" | 3'10" | 965 | 8 | mittel |
| 3 | 500 | 3800 | 3'30" | 1'40" | 970 | 8 | mittel |
| 4 | 240 | >4000 | 2'30" | 1'10" | 927 | 8 | mittel |
| 5 | 350 | 410 | 125'20" | 18'10" | 958 n.17h | 122 | mittel |
| 6 | 370 | >4000 | 2'30" | 1'20" | 971 | 8 | mittel |
| 7 | 400 | 450 | 139'10" | 19'32" | 970 n.17h | 125 | mittel |
| 8 | 380 | 3500 | 5'50" | 2'00" | 966 | 8 | mittel |
| 9 | 390 | 3200 | 5'10" | 1'50" | 967 | 8 | mittel |
| 10 | 400 | >4000 | 5'20" | 2'30" | 970 | 8 | mittel |
| 11 | 400 | 800 | 12'40" | 4'00" | 970 | 8 | mittel |
| 12 | 380 | 410 | 13'50" | 5'20" | 957 | 8 | gut |
| 13 | 520 | 1600 | 9'20" | 3'50" | 970 | 8 | mittel |
| 14 | 420 | 710 | 13'20" | 4'40" | 974 | 8 | gut |
| 15 | 530 | 2100 | 6'00" | 2'50" | 966 | 7 | mittel |

| Vergleichs-beispiel Nr. | a Viskosität sofort (mPa·s) | b Viskosität n. 4 h (mPa·s) | c Gel. 100°C (min; sec) | d Gel. 130°C (min; sec) | e RH | f Aufstrich klebfrei (min) | f Aufstrich Verlauf |
|---|---|---|---|---|---|---|---|
| 1 | 270 | 275 | 52'30" | 17'15" | 970 n.20h | 120 | gut |
| 2 | 3000 | 3000 | 30' | 7' | 972 n.12h | 60 | gut |
| 3 | 3000 | 3000 | 16' | 5' | 970 n. 9h | 20 | mittel |
| 4 | 320 | 4000 | 3'40" | 1'10" | 966 | 8 | schlecht |
| 5 | 520 | 600 | 27'30" | 6'45" | 960 n.14h | 25 | schlecht |
| 6 | 500 | n.15min fest | 45" | 20" | 975 | 3 | schlecht |
| 7 | 350 | 365 | 150' | 45' | 965 n.20h | 140 | mittel |
| 8 | 500 | 540 | 97'55" | 15'20" | 945 n.18h | 76 | mittel |
| 9 | | | | | | | |

**Patentansprüche**

1. Bindemittel auf Basis säurehärtender Phenolharze und saurer Härtungsmittel, die im Gewichts-Verhältnis Harz und Härtungsmittel von 1:0,05 bis 1:0,5 eingesetzt werden, dadurch gekennzeichnet, daß sie als Harz wäßrige Phenolresole mit einem molarem Verhältnis der eingesetzten Phenol- und Aldehydmengen von 1:1,1 bis 1:3,0 und als Härtungsmittel Anlagerungsprodukte von hydroxylgruppenhaltigen, wasservertraglichen Polyolen mit einer OH-Zahl im Bereich von 50 bis 500 an aromatische Sulfonsäuren der allgemeinen Formel

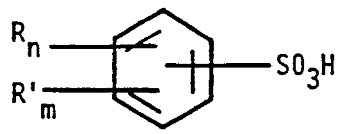

wobei R und R' gleich oder verschieden sein können und Wasserstoff eine Alkyl-, Hydroxi-, Alkoxi, Carboxyl-, eine substituierte oder unsubstituierte Aryl- oder Aralkylgruppe oder eine weitere gegebenenfalls substiuierte Sulfonylgruppe darstellen und n und m gleich oder verschieden sein können und ganze Zahlen von 0 bis 5 jedoch zusammen nicht mehr als 5 bedeuten, wobei das molare Verhältnis Säure zu Polyol im Bereich von 3:1 bis 1:3 liegt, enthalten.

2. Bindemittel nach Anspruch 1, dadurch gekennzeichnet, daß sie als Härtungsmittel Gemische aus Anlagerungsprodukten gemäß Anspruch 1 und Cu-, Al- oder Fe(III)-Salze aromatischer Sulfonsäuren gemäß Anspruch 1 im Gewichts-Verhältnis von 90:10 bis 10:90 enthalten.

3. Bindemittel nach einem der Ansprüche 1 oder 2, dadurch gekennzeichnet, daß die Phenolharze einen Gehalt an monomerem Phenol von weniger als 5% haben.

4. Bindemittel nach den Ansprüchen 1 bis 3, dadurch gekennzeichnet, daß die Phenolharze mit bis zu 30% Harnstoff, Melamin oder Furfurylalkohol modifiziert werden.

**Revendications**

1. Liants à base de résines phénoliques durcissant aux acides et de durcisseurs mis en oeuvre dans un rapport entre la résine et le durcisseur de 1:0,05 à 1:0,5, caractérisé en ce qu'ils contiennent, en tant que résine des résols phénoliques aqueux dans un rapport molaire entre les quantités de phénol et d'aldéhyde mises en oeuvre de 1:1,1 à 1:3,0 et, en tant que durcisseurs, des produits d'addition de polyols contenant des goupes hydroxyles et compatibles avec l'eau ayant un indice d'OH dans le domaine de 50 à 500 sur des acides sulfoniques aromatiques de formule générale

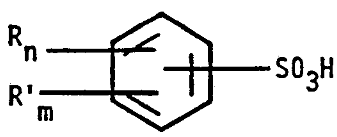

dans laquelle R et R' peuvent être identiques ou différents, représentent de l'hydrogène, un groupe alkyle, hydroxy, alcoxy, carboxyle, un groupe aryle ou aralkyle substitué ou non substitué ou un autre groupe sulfonyle éventuellement substitué et n et m peuvent être identiques ou différents et représentent des nombres entiers de 0 à 5 mais, pris ensemble, non supérieures à 5, le rapport molaire entre l'acide et le polyol se situant dans le domaine de 3:1 à 1:3.

2. Liants selon la revendication 1, caractérisés en ce qu'ils contiennent en tant que durcisseurs, des mélanges obtenus à partir de produits d'addition selon la revendication 1 et de sels de Cu, d'Al ou de Fe(III) d'acides sulfoniques aromatiques selon la revendication 1 dans un rapport pondéral de 90:10 à 10:90.

3. Liants selon l'une des revendications 1 ou 2, caractérisés en ce que les résines phénoliques ont une teneur en phénol monomère de moins de 5%.

4. Liants selon les revendications 1 à 3, caractérisés en ce que les résines phénoliques sont modifiées avec jusqu'à 30% d'urée, de mélamine ou d'alcool furfurylique.

**Claims**

1. Binders based on acid-hardening phenol resins and acid hardening agents, which are used in a weight ratio of resin to hardening agent of from 1:0.05 to 1:0.5, characterized in that they contain, as resin, aqueous phenol resols with a molar ratio of the used quantities of phenol and aldehyde of 1:1·1 to 1:3·0 and, as hardening agents, additive products of water-compatible polyols containing hydroxyl groups with an OH number in the range of from 50 to 500 of aromatic sulphonic acids of the general formula:

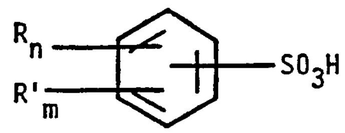

in which R and R' can be the same or different and represent hydrogen, an alkyl, hydroxy, alkoxy, carboxyl, a substituted or unsubstituted aryl or arylkyl group or a further possibly substituted sulphonyl group, and n and m can be the same or different and represent integers from 0 to 5, but together do not represent more than 5, the molar ratio of acid to polyol lying in the range of from 3:1 to 1:3.

2. Binders according to Claim 1, characterized in that they contain, as hardening agents, mixtures of additive products according to Claim 1, and Cu, Al or FE(III) salts of aromatic sulphonic acids according to Claim 1 in a weight ratio of from 90:10 to 10:90.

3. Binders according to one of Claims 1 and 2, characterized in that the phenol resins have a content of monomeric phenol of less than 5%.

4. Binders according to Claims 1 to 3, characterized in that the phenol resins are modified with up to 30% of urea, melamine or furfuryl alcohol.